**Europäisches Patentamt**

**European Patent Office**

**Office européen des brevets**

(19)

(11) Numéro de publication: **0 101 331
B1**

(12)

# FASCICULE DE BREVET EUROPEEN

(45) Date de publication du fascicule du brevet:
**28.01.87**

(21) Numéro de dépôt: **83401203.1**

(22) Date de dépôt: **10.06.83**

(51) Int. Cl.⁴: **G 01 V 1/053,** G 01 V 1/147,
G 01 V 1/09

(54) **Dispositif perfectionné pour engendrer dans le sol des ondes acoustiques transversales.**

(30) Priorité: **19.07.82 FR 8212696**

(43) Date de publication de la demande:
**22.02.84 Bulletin 84/8**

(45) Mention de la délivrance du brevet:
**28.01.87 Bulletin 87/5**

(84) Etats contractants désignés:
**BE DE GB IT NL**

(56) Documents cités:
**FR - A - 2 276 599
FR - A - 2 325 944
FR - A - 2 434 401
FR - A - 2 478 323
US - A - 4 135 598
US - A - 4 291 780**

(73) Titulaire: **INSTITUT FRANCAIS DU PETROLE, 4, Avenue
de Bois-Préau, F-92502 Rueil-Malmaison (FR)**

(72) Inventeur: **Layotte, Pierre-Claude, 2, rue des Pivoines
Résidence de la Palmyre, F-17570 Les Mathes (FR)**
Inventeur: **Cholet, Jacques, 32 bis, route de Saint Nom,
F-78620 L'Etang-La-Ville (FR)**
Inventeur: **Grolet, Pierre, 19, rue de la Paix,
F-78910 Orgerus (FR)**
Inventeur: **Huin, Roland, 58, rue Corneille,
F-78360 Montesson (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention a pour objet un dispositif perfectionné pour engendrer dans le sol des ondes acoustiques transversales, utilisable en particulier dans le domaine de la prospection sismique.

En prospection sismique, la détermination de l'emplacement des couches réfléchissantes du sous-sol est souvent effectuée en transmettant dans le sol des ondes acoustiques longitudinales (P) qui se propagent suivant un mode de compression. Mais on utilise aussi des ondes transversales (S) qui se propagent suivant un mode de distorsion ou de cisaillement. Les ondes transversales permettent des applications intéressantes car leur longueur d'onde étant, à fréquence égale, inférieure à celle des ondes longitudinales, elles possèdent un meilleur pouvoir séparateur. En outre, certaines d'entre elles (ondes SH) présentent la particularité dans certaines conditions de ne pas subir de conversion en présence de discontinuités stratigraphiques et les enregistrements obtenus à partir de ces ondes sont plus simples.

On connait par le brevet US n° 4 291 780 un dispositif adapté à engendrer à la fois des ondes transversales et longitudinales comportant essentiellement un élément-cible déplaçable par rapport à un véhicule entre une position haute de transport et une position basse d'application contre le sol et une masse pour frapper des parois horizontales ou obliques de l'élément-cible. La masse chute vers les parois d'impact de l'élement-cible suivant une trajectoire rectiligne en coulissant le long d'une structure de guidage. La force motrice étant la composante verticale de la force de pesanteur, un tel dispositif ne permet pas de produire des impacts sur des surfaces de l'élément-cible sensiblement perpendiculaires à la surface du sol. L'émission d'ondes de cisaillement s'accompagne toujours d'ondes de compression.

Un dispositif connu, conforme au dispositif défini dans le préambule de la revendication 1 et adapté à engendrer dans le sol des ondes acoustiques transversales, est décrit dans le brevet français n° 2 276 599 par exemple. Il comporte essentiellement un élément-cible pourvu d'une face d'application sur le sol et d'au moins une face latérale de frappe sensiblement perpendiculaire à la face d'application sur le sol, une masse pour frapper l'élément-cible, un bras rigide pivotant par rapport à une plateforme pour supporter la masse et guider sa chute suivant une trajectoire circulaire vers la face latérale, et des moyens de manœuvre pour élever la masse par pivotement du bras rigide par rapport à la plateforme, d'une position basse où la masse est en contact avec la surface latérale de frappe, à une position haute, d'où la chute est déclenchée. L'élément-cible est relié par des moyens de couplage déformables à la partie inférieure d'une structure rigide de support déplaçable par rapport au châssis d'un véhicule entre une position basse où l'élément-cible est en contact avec le sol et une position haute pour le transport.

L'élément-cible étant déposé sur le sol, la masse, préalablement élevée par pivotement du bras, est libérée et vient frapper la face latérale de l'élément-cible. Sous le choc, des ondes acoustiques transversales sont transmises dans le sol. Afin d'améliorer l'efficacité du dispositif, on accroît le couplage de l'élément-cible avec la surface du sol en lui appliquant une force verticale. A cet effet, l'élément-cible comporte à sa partie supérieure des chemins de roulement dont l'écartement est adapté à la voie des essieux du véhicule. L'élément-cible ayant été transporté sur le lieu de déclenchement choisi, est déposé sur le sol, puis le véhicule est manœuvré pour faire monter ses roues arrières sur les chemins de roulement. Une fois les «tirs» sismiques terminés au lieu choisi, le véhicule manœuvre de nouveau afin de faire descendre les roues arrière et libérer l'élément-cible, et de revenir dans la position requise pour que la structure rigide de support puisse être fixée de nouveau à l'élément-cible et le hisser jusqu'à sa position de transport. Il résulte du mode de couplage utilisé que la fréquence de répétition des déclenchements successifs du dispositif en des emplacements distincts, est limitée essentiellement par la durée des manœuvres de l'élément-cible.

Le dispositif antérieur sus-mentionné comporte un élément-cible dont la face de frappe est extérieure, et un bras rigide adapté à pivoter latéralement depuis la verticale jusqu'à sa position de fonctionnement. La zone balayée par le bras au cours de la chute de la masse se trouvant de ce fait à l'extérieur du véhicule et étant accessible, les manœuvres du dispositif peuvent présenter certains dangers. En outre, le relevage du bras, à l'extérieur du véhicule, accroît la dimension transversale totale de la zone de travail du dispositif, ce qui peut rendre difficile ou interdire l'accès du véhicule à certains emplacements cependant nécessaires aux besoins de la prospection sismique (dans certaines zones urbanisées par exemple).

Le dispositif selon l'invention permet d'éviter les inconvénients ci-dessus mentionnés. Il se caractérise en ce que la structure rigide est une cage comportant à sa partie supérieure un ensemble pour supporter la plateforme, le bras pivotant associé ainsi que les moyens de manœuvre du bras rigide, l'élément-cible est relié à sa partie inférieure et ladite face latérale de frappe est une paroi intérieure dudit élément-cible, l'axe de pivotement du bras étant fixé à la plateforme, de manière que la masse, en position basse du bras, vienne en contact avec la face de frappe intérieure et les dimensions du bras rigide, de la plateforme et des moyens de manœuvre étant choisis pour que les déplacements de la masse soient circonscrits à l'intérieur d'un volume délimité par la cage et le châssis du véhicule.

L'élément-cible, le bras rigide associé à la masse et les moyens de manœuvre du bras étant reliés à une cage rigide déplaçable entre une position où l'élément-cible est bienpressé contre le sol (cette force d'ancrage étant par exemple une partie du poids du véhicule) et une position de relevage permettant les déplacements du véhicule, l'intervalle de temps séparant deux déclenchements successifs à deux emplacements différents est de ce fait considérablement réduit.

L'élément-cible peut comporter deux faces de frappe opposées constituées de deux parois intérieures en regard l'une de l'autre, le dispositif comportant également des moyens de rotation pour faire tourner la plateforme par rapport à l'ensemble de support à la partie supérieure de la cage, entre deux positions opposées où le plan de pivotement du bras rigide est perpendiculaire aux faces de frappe intérieures de l'élément-cible.

Ces agencements permettent de limiter la dimension latérale de la zone de travail et de restreindre les zones dangereuses à l'intérieur d'un espace dont les limites sont bien matérialisées.

D'autres caractéristiques et avantages du dispositif apparaîtront à la lecture de la description d'un mode de réalisation préféré, choisi à titre d'exemple non limitatif, et en se référant aux dessins annexés sur lesquels:

– la figure 1 représente une vue d'ensemble du dispositif associé à un véhicule, la cage rigide supportant l'élément-cible, le bras rigide, la plateforme et les moyens de manœuvre, se trouvant en position de relevage;

– la figure 2 représente une vue partielle du dispositif de la figure 1;

– la figure 3 représente une vue transversale en coupe, du dispositif, le plan de pivotement du bras rigide étant dans une première position et l'élément-cible étant en position de travail;

– la figure 4 représente une vue transversale en coupe du dispositif, le plan de pivotement du bras rigide étant dans une seconde position symétrique de la première et l'élément-cible étant en position de relevage, qui montre des moyens de couplage déformables;

– la figure 5 représente une vue de dessus schématique de la cage supportant les moyens de rotation de la plateforme;

– la figure 6 représente une vue de dessus de l'élément-cible;

– la figure 7 représente schématiquement le bras rigide en position basse, la masse étant en contact de l'une des faces de frappe de l'élément-cible, le vérin hydraulique faisant partie des moyens de manœuvre du bras étant en position d'extension;

– la figure 8 représente schématiquement le bras rigide en position haute, le vérin hydraulique faisant partie des moyens de manœuvre étant en position de retrait;

– la figure 9 représente schématiquement le bras rigide, associé aux moyens de manœuvre, en position intermédiaire au cours de la chute de la masse vers une face de frappe de l'élément-cible;

– la figure 10 représente en coupe le vérin hydraulique de manœuvre dans la position illustrée à la figure 7;

– la figure 11 représente en coupe le même vérin dans la position illustrée à la figure 8; et

– la figure 12 représente en coupe le même vérin dans la position illustrée également à la figure 7, mais le système de blocage par intermittence du bras rigide ayant été manœuvré.

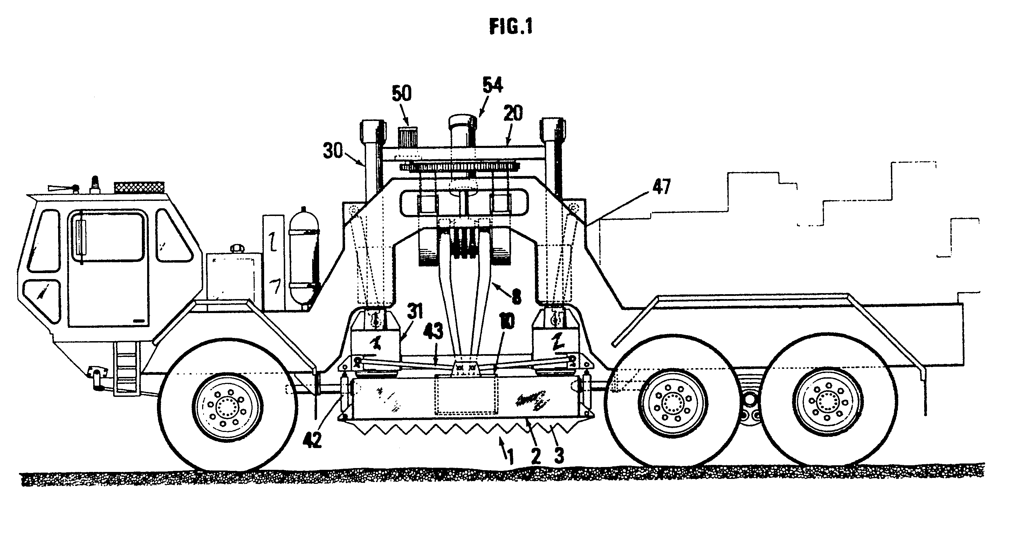

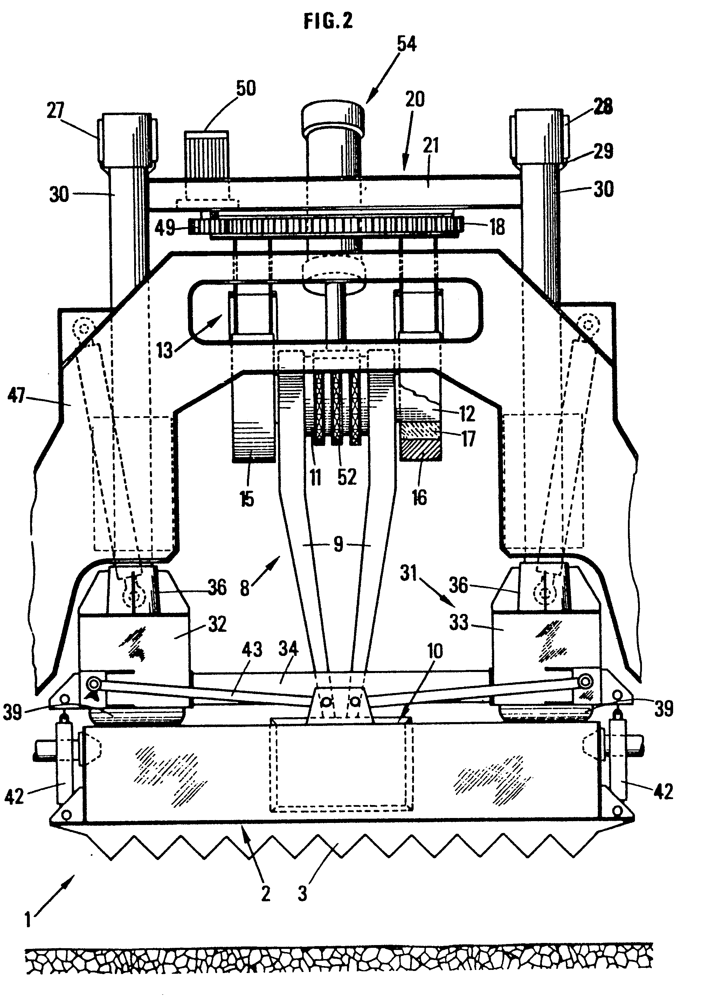

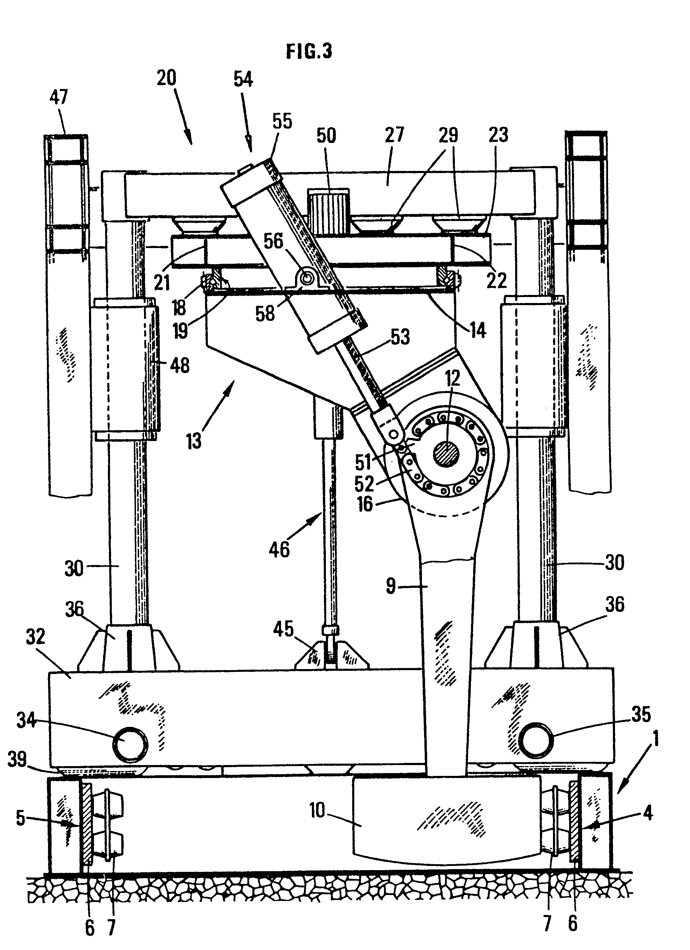

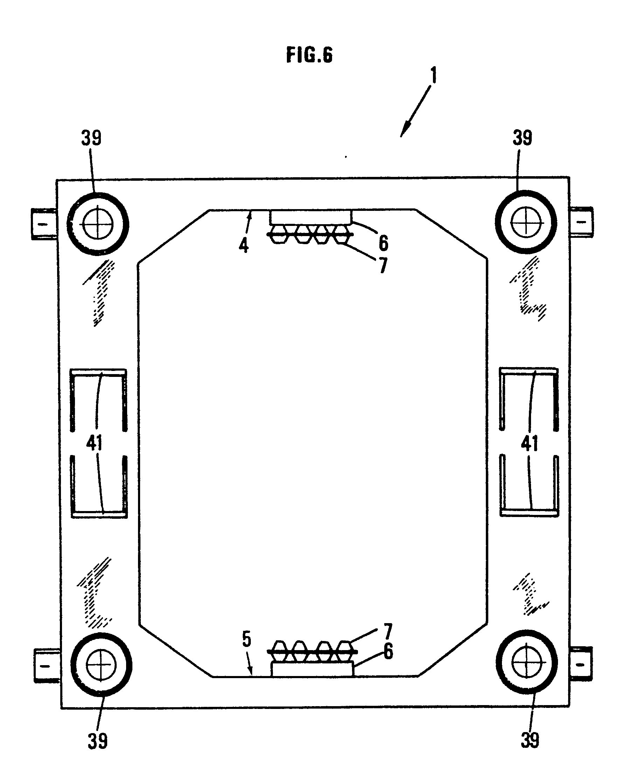

Le dispositif représenté aux figures 1 à 6 comporte un élément-cible 1 de forme rectangulaire, évidée dans sa partie centrale (figure 6) et constitué par exemple d'un assemblage rigide de poutres métalliques, cet élément-cible étant pourvu d'une face 2 d'application sur le sol. Des éléments de couplage 3, constitués de pointes ou saillants peuvent être facultativement fixés à la paroi d'application 2, de manière à accroître le coefficient de couplage de l'élément-cible avec le sol. Deux parois intérieures 4, 5 (figure 3) de celui-ci en regard l'une de l'autre et perpendiculaires à la face d'application 2, sont pourvues de plaques de frappe métalliques 6. Des éléments amortisseurs 7 en polyuréthane sont de préférence fixés contre les plaques de frappe 6. Le dispositif comporte également un bras rigide 8 constitué de deux éléments allongés 9 écartés l'un de l'autre (figure 2). Une première extrémité de chacun des deux éléments est fixée à une masse 10. A leur extrémité opposée les deux éléments 9 sont réunis par une partie cylindrique 11. Un axe 12 solidaire du bras 8 traverse de part en part les deux éléments 9 et la partie cylindrique 11. Le dispositif comporte également une plateforme 13 constituée d'une plaque 14 (figure 3) et de deux éléments de support ou flasques 15, 16 (figure 2) perpendiculaires à la plaque 14 et solidaires de celle-ci. Au voisinage de leur extrémité opposée à la plaque 14, les deux flasques comportent chacun un logement circulaire pour deux disques 17 (figure 2) réalisés en un matériau amortisseur (du polyuréthane par exemple) eux-mêmes pourvus en leur centre d'un logement pour une des extrémités de l'axe 12 solidaire du bras 8. A la plaque 14 est fixée une couronne dentée 18 adaptée à tourner par rapport à une pièce annulaire de support 19 (figure 3) par l'intermédiaire de roulements à billes (non représentés), cette pièce annulaire faisant partie d'une première structure rigide de support 20 rectangulaire comportant également (figures 3, 4, 5):

– un assemblage constitué de deux poutrelles 21, 22 rendues solidaires l'une de l'autre à leurs extrémités par deux autres poutrelles 23, 24 et dans des positions intermédiaires par deux poutrelles 25, 26. La pièce annulaire de support 19 est fixée aux deux poutrelles 25, 26;

– deux poutres 27, 28 parallèles aux poutrelles 23, 24 et fixées respectivement à celles-ci par l'intermédiaire de pièces tronconiques 29 réalisées en un matériau amortisseur également.

Quatre colonnes tubulaires 30 sont fixées rigidement aux extrémités des deux poutres 27, 28 et perpendiculairement au plan formé par celles-ci. Ces quatre colonnes sont fixées à leur seconde extrémité à une seconde structure rigide de support 31 de forme rectangulaire, constituée de deux poutres rigides 32, 33 parallèles, rendues solidaires l'une de l'autre par deux entretoises tubulaires 34, 35 (figures 2, 3), par l'intermédiaire de pièces de raccordement 36. L'ensemble des deux structures rigides 20, 31 et des quatre colonnes 30 constitue la cage rigide.

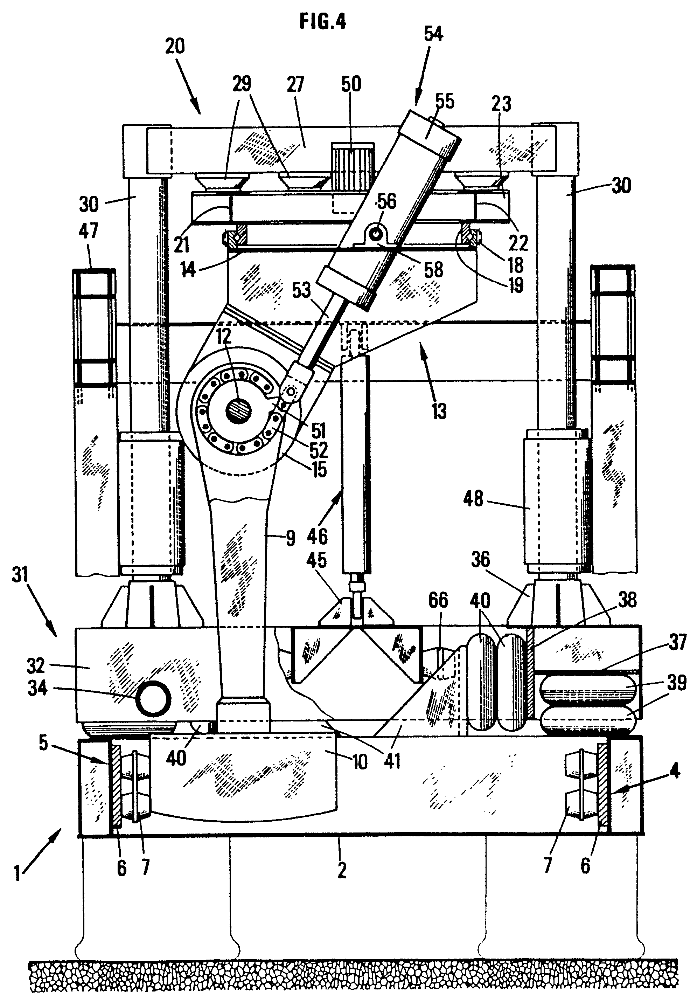

Les poutres rigides 32, 33 de la seconde structure rigide comportent chacune (figure 4) une première cloison d'appui 37 et une seconde cloison d'appui 38, perpendiculaire à la première. Des enceintes déformables 39 constituées par exemple de sacs réalisés en un matériau souple et remplis d'air comprimé, sont fixées d'une part en deux emplacements distincts de chacune des cloisons d'appui 37 et d'autre part à la paroi supérieure de l'élément-cible 1 aux quatre coins de celui-ci (figure 6), de manière à établir un premier couplage élastique entre l'élément-cible et la cage suivant une première direction. De même, des enceintes déformables identiques 40 (figure 4) sont fixées, d'une part en deux emplacements distincts de chacune des cloisons d'appui 38, et d'autre part, à des parois d'appui 41 (figure 6 également) parallèles aux plaques de frappe 6 de l'élément-cible et solidaires de celui-ci, de manière à établir un second couplage élastique entre l'élément-cible et la cage suivant une direction parallèle au plan de pivotement du marteau et orthogonale à la première direction. Des chaînes gainées 42 (figure 2) sont fixées, d'une part à l'élément-cible et, d'autre part, à la seconde structure rigide 31 de la cage, pour limiter l'étirement vertical des enceintes déformables 39 lorsqu'elles supportent ledit élément-cible 1. Des barres de torsion 43 sont fixées à la seconde structure rigide 31 et à des pièces de butée 44 solidaires de l'élément-cible, de manière à empêcher tout mouvement de celui-ci suivant une direction orthogonale au plan de pivotement du bras (axe du véhicule).

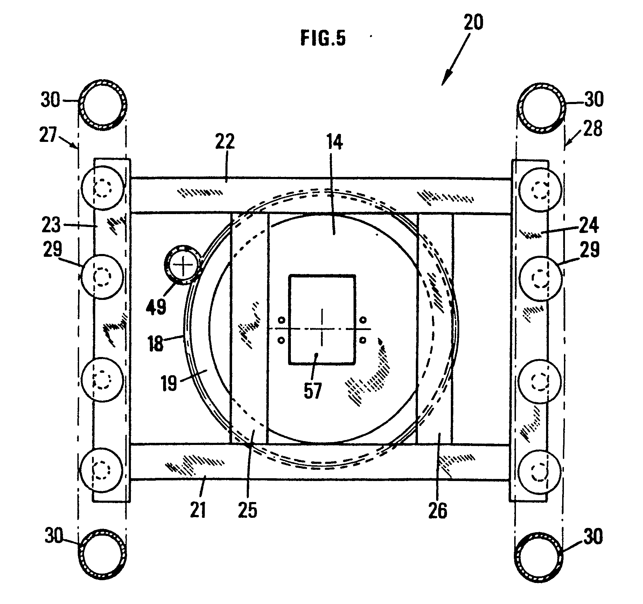

La seconde structure rigide de la cage est pourvue de deux pièces de fixation 45 (figures 4, 5) solidaires des poutres 32, 33 en leurs milieux, auxquelles sont assujetties les tiges de deux vérins 46 (moyens moteurs). Des éléments amortisseurs 66 (figure 4) peuvent être assujettis aux pièces de fixation 45, sur des parois de celles-ci en regard des plaques d'appui 41, pour limiter le déplacement latéral de l'élément-cible par rapport à la seconde structure rigide de la cage et éviter une déformation excessive des moyens de couplage (enceintes déformables 39, 40). Les corps des deux vérins sont reliés au châssis 47 d'un véhicule. Un système hydraulique porté par le véhicule (et non représenté) permet d'alimenter les deux vérins 46 en liquide sous pression.

Quatre manchons 48, associés au châssis 47, assurent le guidage des quatre colonnes 30 lorsque les vérins 46 sont actionnés.

Le dispositif comporte, en outre, une roue dentée 49 (figure 2) adaptée à s'engrener sur la couronne dentée 18 et entraînée en rotation par un moteur 50 fixé à la première structure rigide 20 de la cage.

Les moyens de manœuvre du bras rigide 8 comportent:

– trois roues dentées 51 (figures 3, 4) solidaires de la partie cylindrique 11,
– trois chaînes 52 s'engrenant sur les trois roues dentées 51 et raccordées à l'une de leurs extrémités à la tige 53 d'un vérin 54 dont le corps 55 est fixé à un axe 56. La plaque 14 de la plateforme 11 est pourvue d'une ouverture 57 (figure 5) pour le passage du corps du vérin 54 et de deux paliers 58 adaptés à supporter l'axe 56 fixé au corps 55 du vérin.

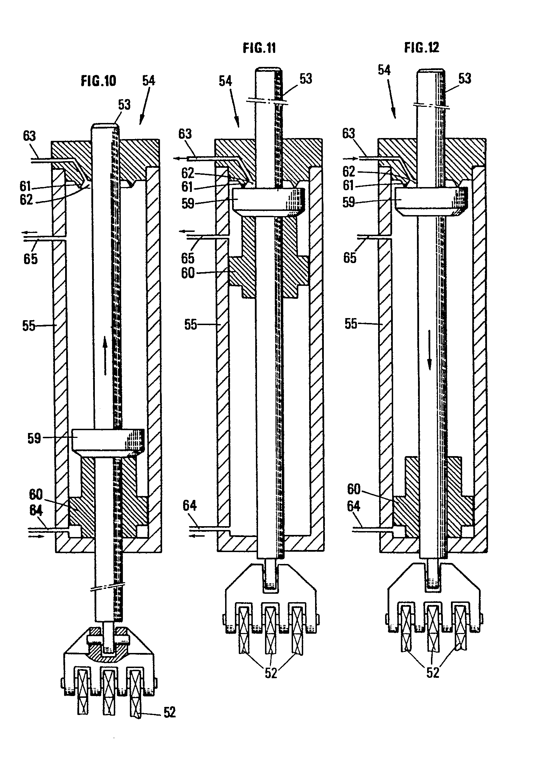

A l'intérieur du corps 55 du vérin 54 (figures 10 à 12), la tige 53 est solidaire d'un clapet 59. La section de celui-ci est inférieure à celle du corps. Entre le clapet 59 et une première extrémité du corps, du côté où la tige 53 est fixée aux chaînes 52, est disposé un piston libre 60 adapté à coulisser de façon étanche à l'intérieur du corps du vérin. La paroi terminale du corps à la seconde extrémité de celui-ci est pourvue d'un siège 61 de section inférieure à celle du clapet, sur lequel celui-ci vient s'appliquer en position de rétraction de la tige 53. Le siège 61 comporte un évidement 62 communiquant avec le système hydraulique déjà mentionné par une canalisation 63. Le piston libre est adapté à se déplacer d'une première position à la première extrémité du corps 55 (figure 10) à une seconde position où il est appliqué contre le clapet 59, celui-ci étant en contact avec le siège 61 (figures 11, 12). Deux canalisations 64, 65 débouchant respectivement dans les deux parties terminales opposées du corps et communiquant également avec le système hydraulique, permettent d'injecter du liquide sous pression à l'intérieur du vérin et de faire coulisser le piston libre entre ses deux positions extrêmes.

Les dimensions de la plateforme 13 et la longueur du bras rigide 8 sont adaptées aux dimensions de la cage et à celles de l'élément-cible, de manière que, pour deux positions de l'axe 12 du bras, symétriques par rapport au plan longitudinal du véhicule (positions représentées aux figures 3, 4) la masse se trouve, en position basse, au contact d'une des plaques de frappe 6 de l'élément-cible ou de l'élément amortisseur 7 correspondant. En outre, la longueur du bras rigide 8 est choisie de manière que les déplacements de la masse 10 soient circonscrits à l'intérieur d'un volume délimité par la cage et le châssis du véhicule.

L'angle que le bras rigide fait avec la verticale, en position haute peut être modifié de manière à modifier la force de l'impact. Suivant un mode préféré de réalisation, la variation de l'angle de pivotement de la masse est obtenue en désolidarisant le siège du clapet 61 de la paroi du corps de vérin. Des moyens hydrauliques sont utilisés pour le déplacer entre une première position au fond du corps de vérin et une seconde position prédéterminée définie par une butée solidaire de la paroi latérale. La première position correspond à l'angle de pivotement minimal. A titre d'exemple ces angles pourront être respectivement de 117° et 88°. On peut choisir n'importe quelle position haut à l'intérieur de ce secteur angulaire en déplaçant le siege jusqu'à un emplacement intermédiaire et en la bloquant mécaniquement par des cales de dimensions appropriées.

Suivant un autre mode de réalisation, l'angle maximal de pivotement du bras rigide 8 peut être modifié en ajoutant (ou en ôtant) un ou plusieurs maillons aux chaînes 52.

Le dispositif fonctionne de la manière suivante:

– Le véhicule ayant été amené à un emplacement choisi pour y effectuer des «tirs» sismiques, et l'élément-cible étant en position haute (figures 1, 2), on actionne les deux vérins 46 pour faire descendre la cage rigide de sa position haute (seconde position) à sa position basse (première position) où l'élément-cible 1 vient s'appliquer contre la surface du sol. De préférence, on applique aux deux vérins une pression hydraulique suffisante pour qu'une partie du véhicule vienne peser sur l'élément-cible en position de travail, de manière à obtenir un bon couplage acoustique;

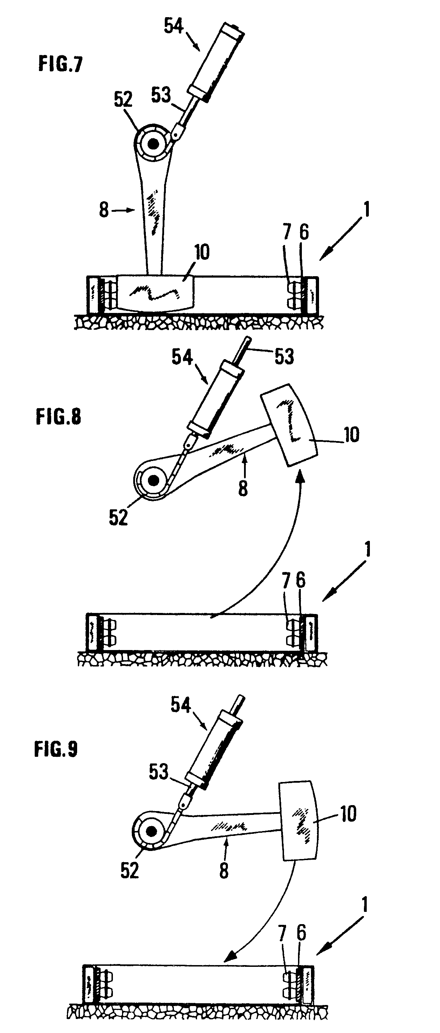

– On actionne le moteur 50 de manière à faire tourner la plateforme et amener le plan de pivotement du bras dans une première position (figures 4 et 7, par exemple). Le bras 8 étant en position basse, la masse 10 est en contact de l'élément amortisseur 7 de l'une des plaques de frappe 6 de l'élément-cible. La tige 53 du vérin de manœuvre 54 se trouve dans sa position d'extension (figure 10) pour laquelle le clapet 59 est en appui contre le piston libre 60, lequel est dans sa première positon à la première extrémité du corps 55;

– On introduit du liquide sous pression par la canalisation 64, de manière à repousser le piston libre 60 vers sa seconde position. Dans son déplacement celui-ci entraîne le clapet 59 et la tige 53 du vérin, ce qui a pour effet de tirer sur les chaînes 52 et de faire pivoter le bras rigide jusqu'à sa position haute (figure 8) où le clapet est en appui contre son siège 61 et le piston libre 60 au contact du clapet (figure 11);

– On applique une forte pression hydraulique par la canalisation 65 et dans le même temps, on applique aux canalisations 63, 64 une pression plus faible, ce qui a pour effet de plaquer le clapet 59 contre son siège 61 et de ramener le piston libre jusqu'à sa première position (figure 12); et

– On injecte dans l'évidement 62 du siège 61, par la canalisation 63, un liquide dont la pression est supérieure à celle qui règne dans le corps 55 entre le piston libre 60 et le clapet 59 de manière à décoller celui-ci de son siège 61. Il se produit alors une égalisation des pressions appliquées de part et d'autre du clapet Le liquide hydraulique s'écoulant librement d'un côté à l'autre du clapet du fait que la section de celui-ci est inférieure à celle du corps 55, la force de freinage opposée par le vérin 54 lors du coulissement de sa tige est pratiquement nulle, ce qui permet à la masse de retomber librement jusqu'à sa position basse où elle vient heurter la plaque de frappe 6. Sous l'effet du choc latéral appliqué à l'élément-cible, des ondes sismiques secondaires (S) sont transmises dans le sol. Les moyens de couplage déformables, constitués par les sacs gonflés 39, 40, évitent la transmission des chocs appliqués à l'élément-cible, à la cage rigide et au châssis du véhicule.

Si l'on veut appliquer au sol des ondes sismiques transversales dont la polarité est opposée à celles précédemment engendrées, on actionne le moteur 50 de manière à faire tourner la plateforme 13 de 180° jusqu'à la position symétrique représentée à la figure 3, où la masse se trouve en contact avec l'autre face de frappe 6 ou de son élément amortisseur 7, et l'on répète de manière identique les différentes étapes de manœuvre du bras 8 et de son vérin de levage 54.

Les opérations de «tir» et d'acquisition des données sismiques étant effectuées à un emplacement déterminé, on actionne les moyens moteurs (vérins 46) pour amener la cage en position de relevage (figure 1) et l'on amène le véhicule jusqu'à une nouvelle position choisie.

De préférence, le dispositif comporte un système de contrôle permettant de rendre automatiques l'ensemble des différentes manœuvres de la cage et du bras rigide. On ne sortirait pas du cadre de l'invention en remplaçant les sacs à air 40 (cf. figure 4) par des soufflets remplis d'air comprimé dont la paroi latérale est déformable, l'axe de ces soufflets étant orienté parallèlement au plan de pivotement du bras rigide.

**Revendications**

1. Dispositif pour engendrer dans le sol des ondes acoustiques transversales ledit dispositif étant monté sur un véhicule et comportant un élément-cible (1) pourvu d'une face d'application (2) sur le sol et d'au moins une face latérale de frappe (5, 6) sensiblement perpendiculaire à ladite face d'application (2), une masse (10) pour frapper l'élément-cible (1), un bras rigide (8) pivotant par rapport à une plateforme (13) pour supporter la masse (10) et guider sa chute suivant une trajectoire circulaire vers ladite face latérale (5, 6) et des moyens de manœuvre (51–54) pour élever la masse (10) par pivotement du bras rigide (8) par rapport à la plateforme (13), d'une position basse où la masse (10) est en contact avec la face latérale de frappe (5, 6) à une position haute d'où la chute est déclenchée, l'élément-cible (1) etant relié par des moyens de couplage (39) déformables à la partie inférieure d'une structure rigide de support (31) déplaçable par rapport au châssis dudit véhicule entre une position où l'élément-cible (1) est en contact avec le sol et une position de relevage, caractérisé en ce que la structure rigide (31) est une cage comportant à sa partie supérieure un ensemble (20) pour supporter la plateforme (13), le bras rigide (8) associé, ainsi que les moyens de manœuvre (51–54) du bras rigide, l'élément-cible (1) est relié à la partie inférieure de la cage et ladite face latérale (5, 6) est une paroi intérieure dudit élément-cible (1), l'axe (12) de pivotement du bras rigide (8) étant fixé à la plateforme (13), de manière que la masse (10), en position basse dudit bras rigide (8), vienne en contact avec la face latérale de frappe (5, 6), les dimensions du bras rigide (8), de la plateforme (13) et

des moyens de manœuvre (51–54) étant choisis pour que les déplacements de la masse (10) soient circonscrits dans un espace délimité par la cage et le châssis du véhicule.

2. Dispositif selon la revendication 1, caractérisé en ce que l'élément-cible comporte deux faces latérales de frappe opposées constituées de deux parois (4, 5) intérieures en regard l'une de l'autre, le dispositif comportant également des moyens de rotation pour faire tourner la plateforme (13) par rapport à l'ensemble (20) de support à la partie supérieure de la cage entre deux positions opposées où le plan de pivotement du bras rigide est perpendiculaire aux faces de frappe intérieures de l'élément-cible.

3. Dispositif selon la revendication 1, caractérisé en ce que les moyens de couplage déformables (39) sont disposés entre la face supérieure de l'élément-cible et des parois (37) parallèles à la face d'applications sur le sol, d'une structure rigide (31) à la partie inférieure de la cage et des moyens de couplage (40) sont disposés entre des parois (38, 41) de l'élément-cible et de la structure rigide (31) parallèles à la face latérale de frappe, la cage comportant quatre colonnes (30) reliant rigidement l'ensemble de support (20) et la structure rigide (31), et étant rendu déplaçable par deux vérins (46) assujettis au châssis du véhicule dont les tiges sont reliées à la structure rigide de la cage, ces deux vérins étant alimentés par un système hydraulique.

4. Dispositif selon la revendication1, caractérisé en ce que les moyens de couplage (39) comportent des enveloppes en matériau déformable remplies d'air comprimé, et associées à des moyens (43, 66) pour limiter les déplacements de l'élément-cible par rapport à la structure (31) de la cage.

5. Dispositif selon la revendication 2, caractérisé en ce que les moyens de rotation pour faire tourner la plateforme (13) comportent une couronne dentée (18) fixée à la plateforme, laquelle est pourvue de plaques de support (15, 16), l'axe de pivotement (12) du bras rigide (8) étant fixé aux plaques de support par l'intermédiaire de disques (17) réalisée en un matériau déformable, et un moteur (50) entraînant une roue dentée (49) pour faire tourner la couronne dentée (18).

6. Dispositif selon la revendication 1, dans lequel les moyens de manœuvre comportent un corps de vérin (55) fixé à la plateforme (13), au moins une chaîne (52) s'engrenant sur une roue dentée (51) solidaire de l'axe de pivotement (12) et fixée à une tige de vérin (53) munie d'un clapet (59) déplaçable à l'intérieur du corps (55), la section du corps étant supérieure à celle du clapet, entre une première position et une seconde position correspondant respectivement aux positions basse et haute du bras rigide, caractérisé en ce qu'il comporte un piston libre (60) disposé entre l'extrémité du corps la plus proche de la chaîne (52) et le clapet (59) et adapté à entraîner celui-ci vers sa seconde position, un système hydraulique communiquant avec le corps de vérin (55) pour mouvoir le piston libre et des moyens (61, 62, 63) coopérant avec le système hydraulique pour immobiliser par intermittence le clapet dans sa seconde position.

7. Dispositif selon la revendication 1, caractérisé en ce qu'un élément amortisseur de choc (7) est fixé contre chaque face latérale de frappe de l'élément-cible (1).

8. Dispositif selon la revendication 6, caractérisé en ce que les moyens pour immobiliser le clapet par intermittence dans sa seconde position comportent un siège de clapet déplaçable à i'intérieure du corps du vérin sous l'action de moyens hydrauliques, et en ce que la longueur de la chaîne (52) est adaptée à l'angie de pivotement total du bras rigide entre sa position haute et sa position basse.

9. Dispositif selon la revendication 3, caractérisé en ce que les éléments élastiques comportent des soufflets remplis d'air comprimé dont la paroi latérale est déformable.

10. Dispositif selon la revendication 6, caractérisé en ce que la plateforme est solidaire d'une couronne dentée adaptée à tourner par rapport à la structure rigide, cette couronne étant entraînée en rotation par des moyens moteurs.

**Patentansprüche**

1. Vorrichtung zum Erzeugen akustischer Transversalwellen im Erdboden, wobei die Vorrichtung auf einem Fahrzeug gelagert ist und ein Targetelement (1) aufweist, das mit einer Bodenanlagefläche (2) und wenigstens einer seitlichen Schlagfläche (5, 6) versehen ist, die im wesentlichen senkrecht zu dieser Aufschlagfläche (2) ist, mit einer Masse (10), um auf das Targetelement (1) zu schlagen, einem steifen Arm (8), der bezüglich einer Plattform (13) verschwenkt, um die Masse (10) zu stützen und ihren Fall entsprechend einer Kreisbahn gegen diese Seitenfläche (5, 6) zu führen, sowie Betätigungseinrichtungen (51–54), die die Masse (10) durch Verschwenken des steifen Arms (8) bezüglich der Plattform (13) aus einer unteren Stellung, wo die Masse (10) in Kontakt mit der seitlichen Schlagfläche (5, 6) ist, in eine obere Stellung, in der der Fall ausgelöst wird, heben, wobei das Targetelement (1) über verformbare Kopplungseinrichtungen (39) mit dem unteren Teil einer steifen Trägerkonstruktion (31) verbunden ist, welche bezüglich des Chassis des Fahrzeugs zwischen einer Stellung, in der das Targetelement (1) in Kontakt mit dem Erdboden kommt und einer Hubstellung bewegbar bzw. verschiebbar ist, dadurch gekennzeichnet, dass die steife Konstruktion (31) ein Käfig ist, der in seinem oberen Teil eine Anordnung (20), welche die Plattform (13) lagert, den zugeordneten steifen Arm (8) sowie die Betätigungseinrichtungen (51–54) für den steifen Arm hat, wobei das Targetelement (1) mit dem unteren Teil des Käfigs verbunden ist und die Seitenfläche (5, 6) eine Innenwandung der Targetelements (1) ist, wobei die Schwenkachse (12) des steifen Arms (8) an der Plattform (13) derart befestigt ist, dass die Masse (10) in unterer Stellung dieses steifen Arms (8) in Kontakt mit der steifen Aufschlagfläche (5, 6) kommt, wobei die Abmessungen des steifen Arms (8), der Plattform (13) und der Betätigungseinrichtungen (51–54) so gewählt sind, dass die Verschiebungen der Masse (10) in einem Raum umschrieben sind, der durch den Käfig und das Chassis des Fahrzeugs begrenzt ist.

2. Vorrichtung nach Anspruch 1, dadurch gekennzeichnet, dass das Targetelement zwei seitliche gegenüberliegende Aufschlagflächen umfasst, die aus zwei einander gegenüberstehenden Innenwandungen (4, 5) bestehen, wobei die Vorrichtung darüber hinaus Dreheinrichtungen umfasst, die die Plattform (13) bezüglich der Trägeranordnung (20) im oberen Teil des Käfigs zwischen zwei gegenüberliegenden Stellungen drehen, wo die Schwenkebene des steifen Arms senkrecht zu den Innenflächen des Targetelements sich befindet.

3. Vorrichtung nach Anspruch 1, dadurch gekennzeichnet, dass die verformbaren Kopplungseinrichtungen (39) zwischen der Oberseite des Targetelementes und Wandungen (37) parallel zur Bodenanlagefläche einer steifen Konstruktion (31) am unteren Teil des Käfigs angeordnet sind und dass Kopplungseinrichtungen (40) zwischen Wandungen (38, 41) des Targetelementes und der steifen Konstruktion (31) parallel zur Aufschlagfläche angeordnet sind; dass der Käfig vier Säulen (30) umfasst, welche steif die Trägeranordnung (20) sowie die steife Konstruktion (31) verbinden und der durch zwei am Chassis des Fahrzeugs befestigte Stellzylinder (46) verschiebbar ist, dessen Stangen mit der steifen Konstruktion des Käfigs verbunden sind, wobei diese beiden Stellzylinder durch ein hydraulisches System gespeist sind.

4. Vorrichtung nach Anspruch 1, dadurch gekennzeichnet, dass die Kopplungseinrichtungen (39) mit Druckluft gefüllte Hüllen aus verformbarem Material umfassen, welche Einrichtungen (43, 66) zugeordnet sind, um die Bewegungen des Targetelementes bezüglich der Konstruktion (31) des Käfigs zu begrenzen.

5. Vorrichtung nach Anspruch 2, dadurch gekennzeichnet, dass die Dreheinrichtungen, die eine Drehung der Plattform (13) veranlassen über einen an der Plattform festen Zahnkranz (18) verfügen, der mit Trägerplatten (15, 16) versehen ist, wobei die Schwenkachse (12) des steifen Arms (8) an den Trägerplatten vermittels von Scheiben (17) aus einem verformbaren Material befestigt ist und ein Motor (50) ein Zahnritzel (49) antreibt, welches die Drehung des Zahnkranzes (18) veranlasst.

6. Vorrichtung nach Anspruch 1, wobei die Betätigungseinrichtungen einen an der Plattform (13) befestigten Stellzylinderkörper (55) umfassen, wobei wenigstens eine Kette (52) gegen einen fest mit der Schwenkachse (12) verbundenen Zahnkranz (51) kämmt, der an einer Stange (53) des Stellzylinders befestigt und mit einem Klappenventil (59) versehen ist, das im Inneren des Gehäuses (55) – bei einem Querschnitt des Körpers grösser als dem des Klappenventils –

zwischen einer ersten Stellung und einer zweiten Stellung bewegbar ist, die jeweils den unteren und oberen Stellungen des steifen Arms entspricht, gekennzeichnet durch einen freien Kolben (60) zwischen dem der Kette (52) nächsten Ende des Körpers und dem Klappenventil (59) und von einer Ausbildung, derart, dass dieses in seine zweite Stellung mitgenommen wird, wobei ein hydraulisches System mit dem Stellzylinderkörper (55) in Verbindung steht, um den freien Kolben zu bewegen und Einrichtungen (61, 62, 63) mit dem hydraulischen System zusammenwirken, um intermittierend das Klappenventil in seiner zweiten Stellung stillzusetzen.

7. Vorrichtung nach Anspruch 1, dadurch gekennzeichnet, dass ein Stossdämpferelement (7) gegen jede seitliche Aufschlagfläche des Targetelementes (1) befestigt ist.

8. Vorrichtung nach Anspruch 6, dadurch gekennzeichnet, dass die Einrichtungen, die intermittierend das Klappenventil in seiner zweiten Stellung festlegen oder unbeweglich machen, einen Klappenventilsitz umfassen, der im Inneren des Stellzylinderkörpers unter der Wirkung hydraulischer Einrichtungen bewegbar ist und dass die Länge der Kette (52) auf den gesamten Schwenkwinkel des steifen Arms zwischen seiner oberen Stellung und seiner unteren Stellung ausgelegt bzw. an diesen angepasst ist.

9. Vorrichtung nach Anspruch 3, dadurch gekennzeichnet, dass die elastischen Elemente druckluftgefüllte Balgen umfassen, deren Seitenwandung verformbar ist.

10. Vorrichtung nach Anspruch 6, dadurch gekennzeichnet, dass die Plattform fest bezüglich eines Zahnkranzes derartiger Ausbildung ist, dass er sich bezüglich der steifen Konstruktion dreht, wobei dieser Zahnkranz durch Antriebseinrichtungen in Drehung versetzt wird.

**Claims**

1. Device for generating shear waves into the ground, the said device being mounted on a vehicle and comprising a target element (1) provided with a side for application (2) on the ground and at least one lateral impact side (56) approximately perpendicular to the said application side (2), a weight (10) for striking the target element (1), a rigid arm (8) swinging in realation to a platform (13) for supporting the weight (10) and guiding its fall along a circular trajectory towards the said lateral face (56) and control means (51–54) for raising the weihgt (10) by swinging the rigid arm (8) in relation to the platform (13) from a low position where the weight (10) is in contact with the lateral impact face (56) to a high position from which the drop is effected, the target element (1) being connected by deformable coupling means to the lower part of a rigid support structure (31) moving in relation to the chassis of the said vehicle between a position where the target element (1) is in contact with the ground and a lifting position, characterized in that the rigid structure (31) is a cage comprising, in its upper part, a unit (20) to support the platform (13), the associated rigid arm (8), together with the means (51–54) for controlling the rigid arm, the target element (1) being connected to the lower part of the cage and the said lateral face (56) being an internal wall of the said target element (1), the swivel pin (12) of the rigid arm (8) being secured to the platform (13) so that the weight (10), in the low position of the said rigid arm (8), comes into contact with the lateral impact face (56), the dimensions of the rigid arm (8), platform (13) and control means (51–54) being selected so that the movements of the weight (10) are circumscribed within a space delineated by the cage and the vehicle chassis.

2. Device according to claim 1, characterized in that the target element comprises two opposed lateral impact faces consisting of two internal walls (4, 5) facing each other, the device also comprising rotation means for causing the platform (13) to rotate in relation to the support unit (20) at the upper part of the cage between tow opposite positions where the pivoting plane of the rigid arm is perpendicular to the internal impact faces of the target element.

3. Device according to claim 1, characterized in that the deformable coupling means (39) are disposed between the upper face of the target element and walls (37), parallel to the application side on the ground, of a rigid structure (31) at the lower part of the cage and couplings means (40) are disposed between walls (38, 41) of the target element and rigid structure (31) which are parallel to the lateral impact face, the cage comprising columns (30) rigidly connecting the support unit (20) and the rigid structure (31) and being rendered movable by two jacks (46) secured to the chassis of the vehicle, the tie rods of which are connected to the rigid structure of the cage, these two jacks being fed by a hydraulic system.

4. Device according to claim 1, characterized in that the coupling means (39) comprise bags made of deformable material which are filled with compressed air, these bags being connected to devices (43, 66) for limiting the movements of the target element in relation to the structure (31) of the cage.

5. Device according to claim 2, characterized in that the rotation means for turning the platform (13) comprise an annular gear (18) secured to the platform provided with support plates (15, 16), the swivel pin (12) of the rigid arm (8) being secured to the support plates by means of disks (17) made of a deformable material, and a motor (50) driving a cog wheel (49) for turning the annular gear (18).

6. Device according to claim 1, characterized in that the control means comprise a jack body (55) secured to the platform (13), at least one chain (52) gearing on a cog wheel (51) integral with the swivel pin (12) and secured to a jack tie rod (53) fitted with a movable check valve (59) inside the body (55), the section of the body being larger than that of the check valve, between a first position and a second position respectively corresponding to the low and high positions of the rigid arm, characterized in that it includes a free floating piston (60) disposed between the body extremity nearest the chain (52) and check valve (59) and adapted to drive the latter towards its second position, a hydraulic system communicating with the jack body (55) so as to propel the free floating piston and means (61, 62, 63) working with the hydraulic system so as to intermittently immobilize the check valve in its second position.

7. Device according to claim 1, characterized in that a shock absorber element (7) is fastened against each lateral impact face of the target element (1).

8. Device according to claim 6, characterized in that the means for intermittently immobilizing the check valve in its second position comprise a chach valve movable inside the jack body, by hydraulic means, and also characterized in that the length of the chain (52) is adapted to the overall pivoting angle of the rigid arm between its high and low positions.

9. Device according to claim 3, characterized in that the elastic elements comprise bellows filled with compressed air, the lateral wall of these bellows being ductile.

10. Device according to claim 6, characterized in that the platform is integral with an annular gear adapted to turn in relation to the rigid structure, this gear being rotated by motor means.

**FIG.1**

# FIG.2

# FIG.3

**FIG.4**

## FIG.5

**FIG.6**

**FIG.7**

**FIG.8**

**FIG.9**

FIG.10    FIG.11    FIG.12